# EUROPEAN PATENT APPLICATION

(11) **EP 4 354 373 A1**
(43) Date of publication of application: **17.04.2024**
(21) Application number: 22200526.6
(22) Date of filing: 10.10.2022
(51) Int. Cl.: G06Q 10/10, G06F 3/01, G06N 3/00

(54) **AI AUTOMATION FOR COMPUTER-BASED PROCESSES BASED ON TACIT EXPERT KNOWLEDGE**

(71) Applicant: British Telecommunications public limited company, London E1 8EE (GB)
(72) Inventor: PENA RIOS, Anasol, London, E1 8EE (GB); LEON GARZA, Hugo, London, E1 8EE (GB); BAHCECI, Ozkan, London E1 8EE (GB)
(74) Representative: British Telecommunications public limited company Intellectual Property Department

(57) **Abstract**

The present application provides an adjustable Artificial Intelligence (AI) system that adapts to new systems and changes in an organisation to provide a seamless co-ordination between entities. This can be also referred to as an orchestrator that interacts with multiple systems and employees to achieve a given goal. The AI system learns from the actions of an expert recording their activity as they complete the same task. The AI system can learn where to find certain guidelines or documents, how to fill out the form with information that has been provided by the user, where to seek for approval for certain permissions, how to comply with company guidelines and update the user with several notifications along the way. The AI system can communicate these needs to human entities using natural language processing and text analytics.

## Description

Embodiments described herein relate generally to a method of generating and implementing an adjustable AI system for automating computer-based processes for users.

Processes within companies are usually complex and involve several steps and approvals, which if not know by the requester, can delay key actions and tasks to be completed. This knowledge is specific to the company processes, thus, if a person changes job they might not be able to do similar processes in their new job correctly, because there is a high probability that the process flows are different (e.g., reimbursements, purchases, travel booking, etc.). In these internal processes, the individuals are not required to learn new skills (e.g., filling forms or sending emails are tasks that most people can complete without problems), but they must perform tasks that require interaction with multiple systems and people, and if they do not follow the right flow it can lead to errors and delays.

A first aspect of the present disclosure provides a computer-implemented method of training a machine learning system for automating and orchestrating a computer-based process, the method comprising obtaining expert user data associated with one or more actions of an expert user as the expert user performs one or more tasks associated with the computer-based process, inputting the existing data and the expert user data associated with the one or more actions to the machine learning system, wherein the machine learning system processes the expert user data to determine a set of data points defining a sequence of actions for carrying out the one or more tasks, and storing the set of data points defining the sequence of actions in a database.

As such, the machine learning system will capture data as an expert user who is familiar with the process performs one or more tasks associated with the computer-based process. In some case, the expert user will perform the tasks using pre-existing information as a guide, or they may perform the tasks from memory based on their tacit knowledge. The machine learning system will then process the data captured from the expert user to derive a sequence of actions for carrying out the tasks, which will then be stored for use in automating and orchestrating the same tasks, for example, for a novice user who is unfamiliar with the process. In doing so, a machine learning system is provided that can be adapted to any computer-based process and adjusted according to different requirements and circumstances.

The method may comprise searching the database for a set of data points defining a sequence of actions for completing the one or more tasks, and outputting an instruction to the expert user to perform the one or more tasks associated with the computer-based process if no data points are identified. That is to say, the machine learning system may search a database to see whether a sequence of actions for performing the task has been derived previously (e.g., in response to a request from a novice user to perform the task), and then will initiate the data capture process if no data points are identified in order to train the machine learning system.

Processing the expert user data may comprise generating a plurality of data points from the expert user data, and determining one or more groups of data points from the plurality of data points, wherein each group of data points corresponds to an action for carrying out a task. For example, determining one or more groups of data points from the plurality of data points may comprise clustering the plurality of data points. That is to say, a plurality of data points may be extracted from the expert user data and mapped into x-dimensional arrays using clustering techniques such as K-Nearest Neighbour or K-Means processing, wherein each array of data points corresponds to an action for carrying out a task. It will of course be appreciated that any suitable clustering algorithm may be used.

The method may further comprise obtaining existing data associated with the computer-based process to be performed, and processing the expert user data and the existing data to determine the set of data points defining the sequence of actions. That is to say, the machine learning system may first obtain pre-existing information related to the computer-based process, such as guideline and policy documents that have been prepared by the organisation to which they relate.

Processing the existing data and the expert user data may comprise extracting key information from the existing data associated with the computer-based process and generating further data points therefrom, and determining the one or more groups of data points corresponding to an action from the further data points and the plurality of data points generated from the expert user data. For example, the key information from the existing data may be extracted using natural language processing. The key information may then be grouped with the expert user data using clustering techniques such as K-Nearest Neighbour or K-Means processing. It will of course be appreciated that any suitable clustering algorithm may be used. By using pre-existing data, such as guideline and policy documents that have been prepared by the organisation, improved clusters of data points may be generated for each action to thereby improve the accuracy of the machine learning system.

The existing data associated with the computer-based process may comprise one or more of a document defining one or more steps of the computer-based process, a technical document associated with an internal system, and a policy document associated with the computer-based process. The machine learning system may then extract key information, such as key words and entities, for comparison to the expert user data.

The expert user data may comprise data generated within a digital environment. For example, the expert user data may comprise data generated within the graphical user interface (GUI) of the computing device being used by the expert user. Obtaining the data generated within a digital environment may comprise tracking one or more user inputs to a computer by the expert user. For example, direct inputs from the mouse, keyboard, microphone and/or other peripheral input devices may be tracked. The location of the inputs within the GUI and the sequence of those inputs may also be tracked.

Obtaining the expert user data may comprise tracking the expert user using one or more sensors. For example, the one or more sensors may comprise an eye tracker. In doing so, the actions of the user outside of the digital environment can also be tracked, which can help to provide context for the data captured within the digital environment.

A second aspect provides a computer-implemented method of automating and orchestrating a computer-based process, the method comprising receiving a request from a user to perform a task associated with the computer-based process, searching a database for a set of data points defining a sequence of actions for carrying out the task, wherein the set of data points have been determined by processing data captured from an expert user as they perform the task, obtaining a first set of information from the user for performing the sequence of actions, performing the sequence of actions based on the set of data points and the first set of information, wherein the performing comprises communicating with one or more external systems and one or more external users, and outputting an outcome of the task to the user based on one or more responses from the external systems and/or external users.

That is to say, once the machine learning system has been trained to perform a task using the tacit knowledge of an expert user, it can be used to automate and orchestrate the task for a new user. In this respect, the machine learning system will communicate with all of the relevant systems (e.g., forms and APIs) and users (e.g., line managers) in order to carry out the sequence of actions associated with the task, and then provide the user with the outcome.

Communicating with the one or more external users may comprise generating and processing text-based messages. For example, generating and processing text-based messages may comprise natural language processing.

The set of data-points may have been determined according to the first aspect described above.

Communicating with the one or more external systems may comprise one or more of inputting data to a form, and accessing one or more application programming interfaces.

In some cases, performing the sequence of actions may comprise generating new user data, wherein the sequence of actions is subsequently updated based on the new user data.

A further aspect provides a system comprising one or more processors, a non-transitory memory, and one or more programs, wherein the one or more programs are stored in the non-transitory memory and configured to be executed by the one or more processors, the one or more programs including instructions for performing any of the methods described above.

Yet a further aspect provides a non-transitory computer readable storage medium storing one or more programs, the one or more programs comprising instructions, which, when executed by an electronic device with one or more processors, cause the electronic device to perform any of the methods described above.

Further features and advantages of the present invention will become apparent from the following description of embodiments thereof, presented by way of example only, and by reference to the drawings, wherein:
Figure 1 shows a representation of part of the overall system and method according to some embodiments;
Figure 2 shows a representation of the process of training the AI system according to some embodiments;
Figure 3 illustrates a part of the data capture for training the AI system according to some embodiments;
Figure 4 shows a representation of the process of using the trained AI system according to some embodiments;
Figure 5 illustrates an example computer system according to some embodiments;
Figure 6 is a flow chart illustrating the process of training and using the AI system according to some embodiments.

Key terms related to embodiments of the present invention are explained in detail below.

**Tacit Knowledge:** This is knowledge you can only gain through experience. It is difficult to document and share tacit knowledge using traditional methods. Tacit knowledge is often expressed as actions, behaviours, intuitions, instincts, and routines. This knowledge is unbelievably valuable to companies in understanding different perspectives and to train new employees.

**Knowledge Management:** This is the process of documenting, distributing, and using knowledge within a collective. Key aspects of successful knowledge management are to provide easy methods of documenting explicit or tacit knowledge. Furthermore, this includes providing easy access to knowledge. In an organisational context, successful knowledge management system can provide competitive advantage, continuous improvement to organisational practices and distribution of lesson learned from one's experience to rest of the organisation. This knowledge can be stored in the form of an internal library, an internal form, or any type of human readable medium. Moreover, the adoption of Industry 4.0 is increasing the complexity of data available to collect and transform into knowledge.

**Machine Learning:** Study of computer algorithms that can create meaning from data. These algorithms can learn from data and examples. This data is then converted into knowledge or a description of the data.
○ **Classification:** Predicting a class/label of an input based on a data set of examples.
○ **Clustering:** Grouping set of inputs based on a similarity metric.
○ **Association Techniques:** Finds relations between data variables for further analysis. This method usually checks dependency, correlation, and variance between variables.

**Similarity Learning:** area of supervised machine learning in artificial intelligence. It is closely related to regression and classification, but the goal is to learn a similarity function that measures how similar or related two objects are. There are four common setups for similarity and metric distance learning: regression, classification, ranking and Local sensitive hashing (LSH).

**Natural Language Processing:** Refers to the branch of artificial intelligence concerned with giving computers the ability to understand text and spoken words in much the same way human beings can. NLP combines computational linguistics-rule-based modelling of human language-with statistical, machine learning, and deep learning models. Together, these technologies enable computers to process human language in the form of text or voice data and to 'understand' its full meaning, complete with the speaker or writer's intent and sentiment.

### Overview

The present application provides an adjustable Artificial Intelligence (AI) system that adapts to new systems and changes in an organisation to provide a seamless coordination between entities. This can be also referred to as an orchestrator that interacts with multiple systems and employees to achieve a given task. The AI system first learns from the actions of an expert recording their activity as they complete the same task. The AI system can learn where to find certain guidelines or documents, how to fill out forms with information that has been provided by the user, where to seek for approval for certain permissions, how to comply with company guidelines and update the user with several notifications along the way. The AI system can communicate these needs to human entities using natural language processing and text analytics.

As such, the system monitors user behaviour to learn processes, in particular, logical processes such as entirely virtualised or logical systems, that involve multiple disparate systems and/or resources to proactively guide future executions of said processes. For example, a human, computer-based process involving accessing three separate resources (databases, systems etc.) to transform or generate data to achieve an effect is learned and repeated by the adjustable AI system.

In this respect, it will be understood that computer-based processes typically involve a finite number of tasks, with each task consisting of one or more actions. Some of these steps do not require a specific skill to complete (e.g., filling a form), however, performing them in the correct sequence, and the knowledge of which systems to use or which stakeholders get involved (e.g., approvals) can be complex and confusing, particularly, to someone new to a company. Formal documentation on this process might exist, however there is a risk that they change or adapt to different constraints without being updated. Moreover, common processes across companies (e.g., submitting an expense claim), may be different because of the different business requirements, rules, policies, systems, and stakeholders a user needs to interact with. Therefore, these tasks can require a certain level of knowledge and expertise with respect to company guidelines and internal processes in order to complete.

The present application thus provides a method and system for automating, orchestrating and documenting different processes, using an adjustable AI system that operates as an orchestrator to carry out each action required to complete a given task.

The present application provides a first stage that involves capturing existing knowledge and data from expert users to encapsulate their expertise, and a second stage wherein the trained AI system uses this knowledge and data to guide and automate company-specific processes, such as obtaining access privileges to a certain system, reporting an IT (Information Technology) fault, or completing an expense claim in line with company guidelines, or any computer-based process where the steps required to complete the process can vary between company.

The present application uses data analysis, clustering, and artificial intelligence techniques to automatically identify all the stakeholders and systems related to a specific process and understand the relationships between all these entities. This allows the system to subsequently guide inexperienced users in executing internal processes, automate process execution through an AI system that is capable of interacting with all the related entities, identify missing steps in processes for auditing purposes, and identify bottlenecks in the processes so that the time cost can be reduced.

The AI system described herein is capable of being trained to automate any computer-based internal process, and then adjust to different internal changes as required. As one example, if one action within a process requires communication with a person having a specific job title and there has been a change in personnel, the AI system will adjust accordingly, for example, by looking up the new contact details connected to that job title or contacting people within the same team.

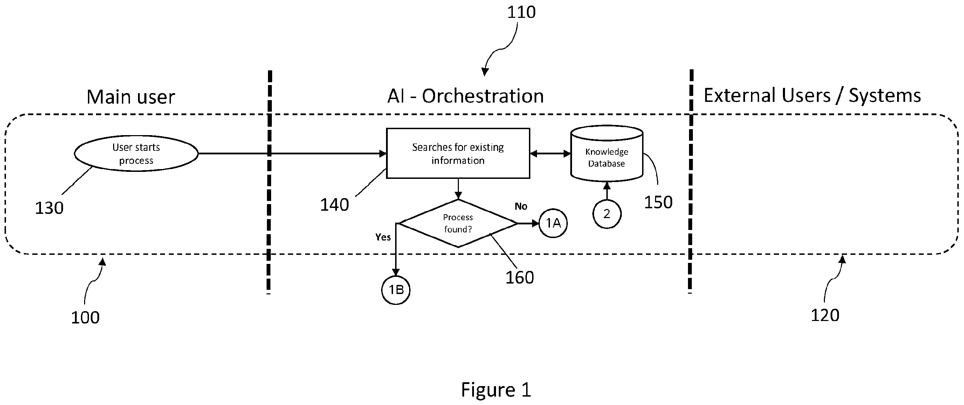

Figure 1 illustrates an overview of the components required to implement the method described herein, comprising a user 100, the AI system 110 and any external users or systems 120 that may be part of the company infrastructure. It will be understood that the AI system 110 may be stored as a program on a non-transitory computer readable storage medium of any computer system, for example, the computing device of the user 100, or some other computing device in wired or wireless communication with that of the user 100. Likewise, it will be understood that the user 100 may interact with the AI system 110 through any suitable computing device (e.g., desktop, laptop, or tablet computer).

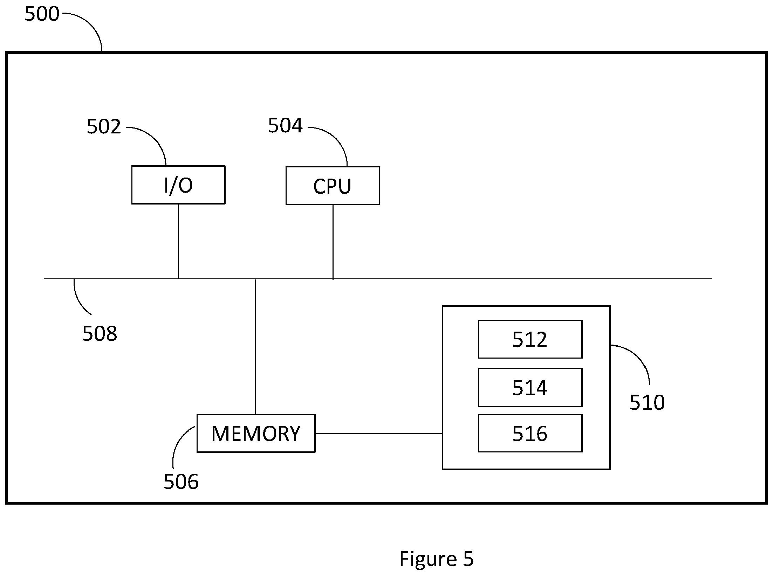

An example of a computer system 500 that is configured to operate as the AI system is illustrated by Figure 5. The computer system 500 comprises a processor 504 operable to execute machine code instructions stored in a working memory 506. By means of a general purpose bus 508, a user operable input/output device 502 is capable of communication with the processor 504. The user operable input device 502 comprises, for example, a keyboard and/or a touchpad, a mouse or other pointing device, a contact sensitive surface on a display unit of a computer terminal, a writing tablet, speech recognition means, haptic input means, or any other means by which a user input action can be interpreted and converted into data signals.

As described above, the AI system 510 may be stored on the memory 506 as a set of code instructions to be executed by the processor 504. As will be described in more detail below, the AI system 510 may comprise three different modules; an expert user data capture module 512, an expert knowledge extraction module 514 and a task orchestration module 516, the functions of which will become clear from the following description.

As described above, the first stage is to train the AI system 110 by capturing expert user data and knowledge, for example, using the expert user data capture module 512 and expert knowledge extraction module 514. In doing so, the AI system will obtain data from an expert user 100 performing a given process, automatically identify key actions and learn how to perform each task within that process.

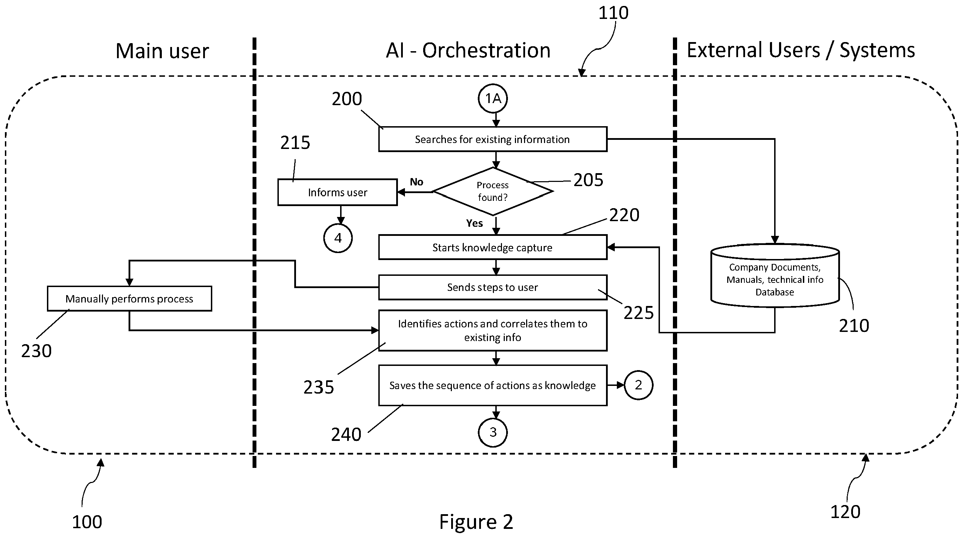

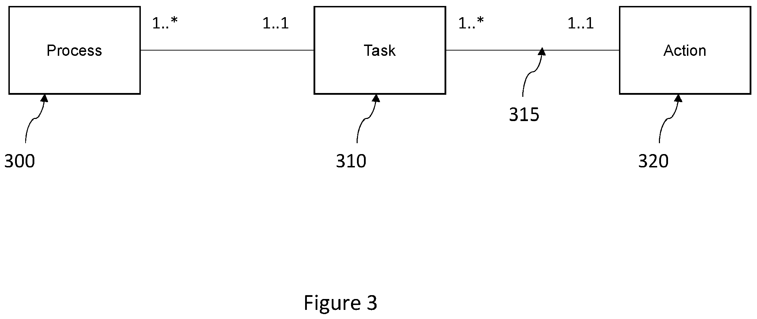

To initiate the training, an expert user 100 will request to start the process (130) that they wish to complete. At 140, the AI system 110 will search a knowledge database 150, which may be stored locally or on a different computing system, to determine whether there are any previous examples of the required task and/or any records of a sequence of actions required in order to carry out the task. At 160, there are two options: (a) the AI system already knows how to automate the task based on existing information in the knowledge database 150 and can take full control of the process sequence, as will be described in more detail further below, or (b) it will only have the basic steps provided by existing documentation (e.g., manuals, technical documents, process guidelines, etc.), or have an incomplete or outdated process sequence stored in the knowledge database 150. In the latter cases, further training of the AI system 110 is required and the method moves to stage 1A, as illustrated by Figures 2 and 3.

### Training the AI System

At 200, the AI system 110 (e.g., the expert user data capture module 512) will search for existing information about the steps of the process to be performed in one or more external databases 210 and/or the knowledge database 150, which will be used for performing the expert knowledge extraction process and/or to assist the user whilst the expert data capture is being performed, as will be described below. This may include searching for existing manuals, policy documents, technical information and any other company information that may be relevant to the process. If the AI system 110 is unable to identify the steps of the process in the existing documentation at 205, or no existing documentation is available at all, it may output a notification to the user 100 at 215 to inform that the required information is unavailable.

In cases where the AI system 110 is able to identify some relevant information about the process (i.e., process related data) to act upon, the expert data capture process is started at 220, with the any known steps of the process first being sent to the expert user 100 at 225.

At 230, the expert user 100 will manually perform the process according to the steps that are defined in the existing process related data. In some cases, the AI system 110 may be able to suggest some actions based on required steps and existing knowledge of that process, or other similar tasks. Additionally, in some cases where a portion of the steps are known from the existing process related data (i.e., either from documentation stored in the external databases 120 or process sequences already stored in the knowledge database 150), the AI system 110 may request the expert user 100 to perform only the steps where existing process related data is unavailable. As another example, in cases where process related data exists but is outdated (e.g., an external user identified in the existing process related data no longer works at the organisation), the expert user 100 may be required to perform the relevant steps based on their current knowledge of the organisation in order to update that process.

In cases where the AI system 110 is unable to identify any relevant information about the process (i.e., process related data) to act upon, the expert data capture process is started at 220, with the expert user 100 performing the tasks based on their memory and experience of that process, and their knowledge of the organisation. This may be the case, for example, where a new process is being introduced to the AI system 110 and no existing documentation has been developed.

Whilst the expert user 100 is performing each task required, the expert user data capture module 512 of the AI system 110 will track two main categories of expert user data.

Firstly, it will track digital environment data. In this respect, a task in a 2D environment will typically consist of actions captured by the digital environment data (i.e., GUIs (Graphical User Interface)). As such, the AI system 110 will track data relating to those actions, as data points captured through direct inputs from the mouse, keyboard, microphone and/or other peripheral input devices. For example, a "click" action in a specific location of the screen during a particular step of the process will be collected as a data point. The AI system 110 may also track what screens and windows are opened during the process, which screens or windows are in use (e.g., if multiple are open), when those screens or windows are open, and in response to which user inputs.

Secondly, it will track user data as any data point related to the actions of the user 100 outside of the 2D environment, such as the eye movements of the user 100. The tracking of eye movements can be used to study human behaviour because it is an accurate way to objectively measure and understand visual attention. For example, the user 100 may look at a specific location of a screen or outside the screen during a particular step of the process. The user data helps to provide context for the digital environment data. For example, if a "click" action happens but the user was looking outside the screen, the action can then be classified as an accidental or meaningless action.

An eye tracker typically uses invisible near-infrared light and high-definition cameras to project light onto the eye and record the direction in which the light is reflected off the cornea. Advanced algorithms are then used to calculate the position of the eye and determine exactly where it is focused. This makes it possible to measure and study visual behaviour and fine eye movements, as the position of the eye can be mapped multiple times a second. A recording can also be made of the scene a person is looking at, and using eye tracking software it is possible to produce a visual map of how the person viewed elements of the scene.

Eye tracking devices generally fall into three categories; screen based, wearable and webcam. The screen based eye tracking devices are typically stand-alone, remote devices that can be attached to a laptop or monitor. Examples of wearable devices include eye tracking glasses and virtual reality (VR) headsets with integrated eye tracking. Webcam eye trackers, on the other hand, do not implement sensors or specialized cameras, and are instead implemented using the webcam device attached or built-in to a computer. It will of course be appreciated that any suitable eye tracking device may be used to collect the user data.

At 235, once the user 100 has completed all of the actions and tasks within the process, the AI system 110 will then run the expert knowledge extraction module 514 to analyse all of the obtained data (i.e., any existing process related data, digital environment data and user data) to classify and identify the key actions needed to complete the actions and tasks associated with the process.

In doing so, the expert knowledge extraction module 514 may discard some of the data points, for example, in cases where the user data (e.g., eye movements) indicate an accidental "click" action captured in the digital environment data. The remaining data points will be grouped together to describe the various actions and tasks needed to perform the process.

To extract the key information from the expert user data and any existing process related data, in particular, the existing process guidelines, GUIs used during the process, and other key documents used during the process such as emails and forms, the AI system 110 may use natural language processing (NLP) to extract the key elements (e.g., the key entries in a form) of the process, which can then be associated with the data points captured from the expert user 100.

In this respect, the AI system 110 may use any suitable NLP technique, including by not limited to, removing unnecessary words from the documents, recognising named entities and analysing word frequency to identify important terms. Sentiment analysis may also be used for documents that relate to human interactions such as emails between users. Any key terms extracted from the existing process related data may be compared to an existing dictionary of business-related terms, i.e., domain specific language (DSL).

The data points may be grouped using a number of different artificial intelligence techniques, such as classification, similarity, clustering, and association techniques to find patterns and similarities between the data points obtained from the user and the key information extracted from the expert user data and any existing process related data, which may also be compared to previously captured and labelled data, to thereby determine a sequence of tasks and actions for carrying out the process.

In this respect, clustering and classification techniques such as K-Nearest Neighbour (KNN) and K-Means may be used to process the data points extracted from the expert user data, and any key information extracted from the expert user data and existing process related data. As an example, if the process being learnt relates to an expense claim, and one of the tasks is the filling out of an expense form, the key words may be "expense" and other information input to that form by the expert user, such as "hotel", "taxi" etc. These key words will be extracted using NLP and then compared with key information extracted from the existing process related data. The expert user data points and any extracted key words can be mapped in an x-dimensional vector and the distance between those vectors calculated (e.g., using K-NN or K-Means) to identify groups (i.e. clusters) of data points, wherein each cluster (e.g., each x-dimensional array of data points) corresponds to a particular action. Based on these clusters of data points, a sequence of tasks and actions can be determined for execution by the AI system 110. In cases where existing process related data is available, the distances may be used to compare the expert user data with the existing process related data to provide improved clusters of data points, and thus improve the accuracy of the sequence of tasks and actions derived.

As further illustrated by Figure 3, the actions 320 identified in this stage, as well as the relationships 315 between actions 320 and tasks 310, and the expected sequence of tasks 310 needed to perform each process 300, are then stored (240), for example, in the knowledge database 150 shown in Figure 1. In this respect, a set of rules and data points for implementing each process 300 will be generated and stored, which will link actions 320 and tasks 310, for example, where a decision is needed to move between the steps of the process. The data stored in this database 150 will then be used by the AI system 110 to understand what needs to be done to complete a given task or process.

### Using the AI system to automate and orchestrate a task

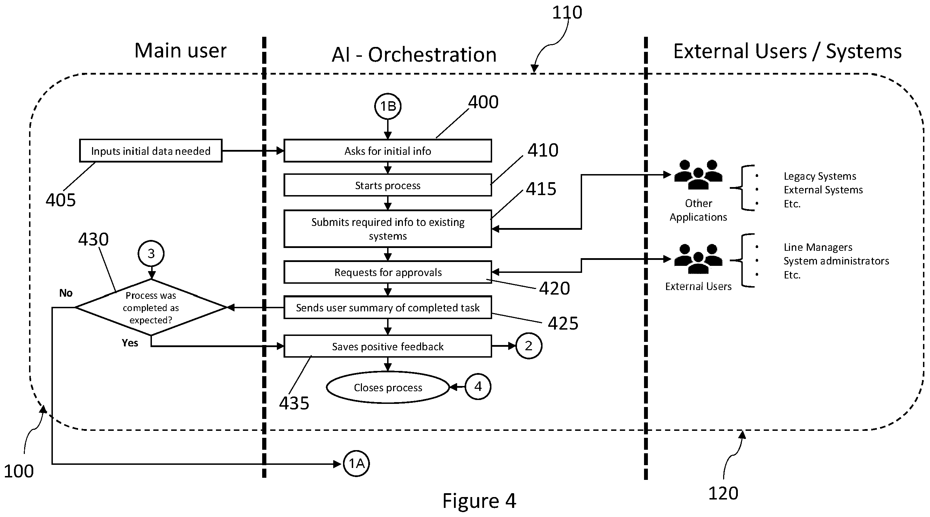

Once the AI system 110 has been trained to automate a process using the tacit knowledge of an expert user, the process may be initiated by a user 100, for example, a new employee, in the same way as that described previously with respect to Figure 1. As before, the AI system 110 will query the knowledge database 150 is determine whether there are any previous examples of the required process and/or a record of a sequence of actions for carrying out the process. Once the AI system 110 has determined that the required information is available in the knowledge database 150, the task orchestration module 516 of the AI system 110 will begin the task automation and orchestration method 1B, as illustrated by Figure 4.

At 400, the task orchestration module 516 of the AI system 110 will request the initial data required to complete the process. For example, if the user 100 wishes to submit an expenses claim, the user 100 may be required to input the monetary value of the expense claim, an indication of the reason for the expense and upload a copy of the receipt. At 405, the user 100 will input this data, for example, using the input/output device 502.

Once the AI system 110 has received the required information, the AI system 110 will start the orchestration process by communicating with one or more external users or systems 120 (steps 415 and 420) based on the information provided by the user 100. These actions may occur more than once, in parallel or sequentially, and are not restricted to a particular order, other than that defined by the rules of the process being carried out. As before, the AI system 110 may use clustering techniques (e.g., K-NN and K-Means) to compare the information entered by the user 100 to the information stored in the knowledge database 150, to thereby derive the correct tasks and actions associated with the relevant process for the information that has been provided. For example, based on the information provided by the user 100, the AI system 110 may use clustering techniques to determine which external systems and users 120 that are required to carry out the process, and the key information needed to communicate with those external systems and users 120.

The AI system 110 may interact with external systems 120 to submit the information, for example, through the completion of forms in a legacy system, or accessing existing application programming interfaces (APIs). In the present example, if the company has an internal portal with a form for submitting the expense claims, the AI system 120 will extract the information from the user input and complete the form, for example, using a rules based checking algorithm.

Similarly, the AI system 110 may communicate with other people from the company using Natural Language Processing (NLP) techniques, such as those described previously, to send and process communications in the form of text or voice data, for example, to send emails to a line manager or financial officer requesting information or approval, and then process their response.

It will of course be appreciated, that the AI system 110 will be able to adjust itself to understand whether an entity (system or a person) relevant to this task is replaced with a new entity (system or a person). For example, when new process-related data is generated (e.g., by updated policy documents), the AI system 110 will automatically adjust the sequence of tasks 310 and actions 320 determined previously based on this updated information.

In this respect, any new information derived during the execution of the process can be analysed by the AI system 110 using similar clustering techniques as described previously to thereby update the sequence of tasks 310 and actions 320 associated with the process. In some cases, if an action is taken that corresponds to change in the application of the policies and rules associated with the process, a notification may be output to the relevant external user 120 (e.g., a line manager or other person of authority) to approve the change. If the external user 120 approves the change, the sequence of tasks 310 and actions 320 will be updated accordingly to allow this action in future executions of the process. If the external user 120 does not approve the change, the sequence of tasks 310 and actions 320 will be updated to record this as an incorrect action.

Once the process is completed, the AI system 110 will send a summary of the actions and responses to the user 100 at 425 and request for confirmation that the task has been completed satisfactorily (430). If confirmed by the user 100, the task will be closed, and a record of the actions will be saved (435) to enrich the knowledge database 150 for future auditing purposes. If the user replies with a negative response, the data capture and extraction described with reference to Figure 2 will be repeated in order to improve the data stored for that process.

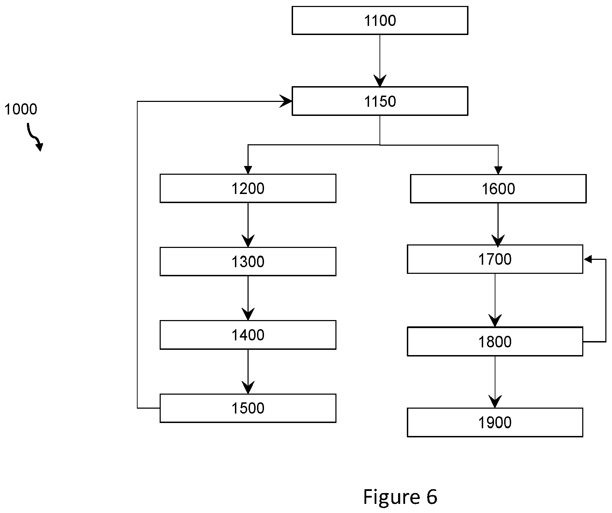

Figure 6 provides an overview of the process 1000 for training and using the AI system 110 described herein. It will be understood that not all the elements shown in the figure may necessarily be implemented in all embodiments, and that the system may be implemented with fewer, or more, elements than those shown.

At step 1100, a user may input a request to the AI system 110 to start a task, such as making an expense claim or requesting annual leave, or any task that is carried out in a digital environment (i.e., using a computer system).

At step 1150, the AI system 110 will search the knowledge database 150 to determine whether any data points defining a sequence of actions for performing the process associated with that task.

If no data points or incomplete data points are identified, that is, the AI system 1150 has not been trained to perform that task or does not have all of the information needed to perform the task, the expert knowledge and user data capture process is initiated. At step 1200, the AI system 110 may obtain any existing data associated with that process. For example, the AI system 110 will search for existing manuals, policy documents, technical information and any other company information that may be relevant to the steps of process.

At step 1300, the AI system 110 will instruct an expert user to perform the task, and will capture expert user data associated with the actions performed by the expert user as they perform the task. This expert user data may include data generated by the user within the digital environment (i.e., their computing device), such as which windows they have open on the computer interface, and the inputs they make to the interface. The expert user data may also include data captured outside of the digital environment, such as the eye movements of the user.

At step 1400, the captured expert user data and any available existing data will be input to the AI system 110 and processed to determine a set of data points defining the sequence of actions for carrying out the task. This includes generating data points from the expert user data and determining groups of data points, for example, using clustering techniques, wherein each group of data points corresponds to an action for carrying out the task. This may also include extracting the key information from the captured expert user data and existing process related data, and correlating it with the expert user data, for example, using clustering techniques, to further improve the data points associated with each action. The AI system 110 may extract the key information from the captured expert user data and existing process related data using natural language processing.

At step 1500, the set of data points will be stored in the knowledge database 150 for future use in automating and orchestrating the task, for example, for users who are new to a company.

Returning to step 1150, once the AI system 110 is able to identify a set of data points defining a sequence of actions for performing a task that has been requested by a user at step 1100, the AI system 110 can start the process of automating and orchestrating the computer-based process.

At step 1600, the AI system 110 will obtain any key information needed to perform the task from the user. For example, in the case of requesting annual leave, the key information may comprise the dates and number of days to be taken. In the case of an expense claim, the information may comprise the value of the expense, an indication of a reason for the expense and a copy of a receipt.

At step 1700, the AI system 110 will communicate with one or more external systems that are required by the sequence of actions, for example, inputting data to a form, and accessing one or more application programming interfaces.

At step 1800, the AI system 110 will communicate with one or more external users that are required by the sequence of actions, for example, by generating and sending text-based messages such as emails. For example, the external user may be a person who is required to approve the expense claim or annual leave request, such as a line manager or financial officer. The AI system 110 may use natural language processing to generate and process the text-based messages.

It will be appreciated that steps 1700 and 1800 may occur more than once, in parallel or sequentially, and are not restricted to a particular order, other than that defined by the data points defining the sequence of actions for carrying out the task.

Once the task has been completed, at step 1900, the AI system 110 will output the result of the task to the user based on the responses from the external systems and/or external users. For example, the AI system 110 may output a notification that the request for annual leave has been accepted.

### Further Examples of Use

As noted above, the AI system 110 is trained to perform processes that are carried out in a digital environment (i.e., through a computer system), and that involve interactions and communications between the user and some other entity (another person or system) in the digital environment

For example, the AI system 110 may be used to setup a meeting with another person. This is a communication between a first entity (user of the system) and a second entity (the other person), the communications those entities being carried out through an email system. The AI system 110 can be trained to setup the meeting by opening the email system, searching for the next available time slot between both users using a calendar function, and sending a meeting request including both people.

As another example, the AI system 110 can be trained to complete a timesheet for a user with all of the hours dedicated to a particular project. The AI system 110 can be trained to open the relevant windows or applications, create a new timesheet, setup the date for the given week, identify the correct project, and use NPL to extract the relevant information to include in the timesheet, including how many hours to dedicate to that project, and then save and submit the timesheet.

The above discussed method may be performed using a computer system or similar computational resource, or system comprising one or more processors and a non-transitory memory storing one or more programs configured to execute the method. Likewise, a non-transitory computer readable storage medium may store one or more programs that comprise instructions that, when executed, carry out the training and implementation of the AI system.

Whilst certain embodiments have been described, these embodiments have been presented by way of example only, and are not intended to limit the scope of the application. Indeed, the novel devices, and methods described herein may be embodied in a variety of other forms; furthermore, various omissions, substitutions and changes in the form of the devices, methods and products described herein may be made without departing from the scope of the present application. The word "comprising" can mean "including" or "consisting of" and therefore does not exclude the presence of elements or steps other than those listed in any claim or the specification as a whole. The mere fact that certain measures are recited in mutually different dependent claims does not indicate that a combination of these measures cannot be used to advantage. The accompanying claims and their equivalents are intended to cover such forms or modifications as would fall within the scope of the application.

## Claims

1. A computer-implemented method of training a machine learning system for automating and orchestrating a computer-based process, the method comprising:
obtaining expert user data associated with one or more actions of an expert user as the expert user performs one or more tasks associated with the computer-based process to be performed;
inputting the expert user data associated with the one or more actions to the machine learning system, wherein the machine learning system processes the expert user data to determine a set of data points defining a sequence of actions for carrying out the one or more tasks; and
storing the set of data points defining the sequence of actions in a database.

2. The method according to claim 1, wherein the method comprises searching the database for a set of data points defining a sequence of actions for completing the one or more tasks, and outputting an instruction to the expert user to perform the one or more tasks associated with the computer-based process if no data points are identified.

3. The method according to claims 1 or 2, wherein processing the expert user data comprises:
generating a plurality of data points from the expert user data; and
determining one or more groups of data points from the plurality of data points, wherein each group of data points corresponds to an action for carrying out a task.

4. The method according to any preceding claim, further comprising obtaining existing data associated with the computer-based process to be performed, and processing the expert user data and the existing data to determine the set of data points defining the sequence of actions.

5. The method according to claim 4, wherein the existing data associated with the computer-based process comprises one or more of: a document defining one or more steps of the computer-based process, a technical document associated with an internal system, and a policy document associated with the computer-based process.

6. The method according to any preceding claim, wherein the expert user data comprises data generated within a digital environment.

7. The method according to claim 6, wherein obtaining the data generated within a digital environment comprises tracking one or more user inputs to a computer by the expert user.

8. The method according to any preceding claim, wherein obtaining the expert user data comprises tracking the expert user using one or more sensors, wherein the one or more sensors optionally comprises an eye tracker.

9. A computer-implemented method of automating and orchestrating a computer-based process, the method comprising:
receiving a request from a user to perform a task associated with the computer-based process;
searching a database for a set of data points defining a sequence of actions for carrying out the task, wherein the set of data points have been determined by processing data captured from an expert user as they perform the task;
obtaining a first set of information from the user for performing the sequence of actions;
performing the sequence of actions based on the set of data points and the first set of information, wherein the performing comprises communicating with one or more external systems and one or more external users; and
outputting an outcome of the task to the user based on one or more responses from the external systems and/or external users.

10. The method according to claim 10, wherein communicating with the one or more external users comprises generating and processing text-based messages.

11. The method according to claim 11, wherein the generating and processing text-based messages comprises natural language processing.

12. The method according to any of claims 9 to 11, wherein the set of data-points have been determined according to any of claims 1 to 8.

13. The method according to any of claims 9 to 12, wherein communicating with one or more external systems comprises one or more of: inputting data to a form, and accessing one or more application programming interfaces.

14. A system comprising:
one or more processors;
a non-transitory memory; and
one or more programs, wherein the one or more programs are stored in the non-transitory memory and configured to be executed by the one or more processors, the one or more programs including instructions for performing any of the methods of claims 1 to 13.

15. A non-transitory computer readable storage medium storing one or more programs, the one or more programs comprising instructions, which, when executed by an electronic device with one or more processors, cause the electronic device to perform any of the methods of claims 1 to 13.
